# FASCICULE DE BREVET EUROPEEN

(11) **EP 0 765 444 B1**
(45) Date de publication et mention de la délivrance du brevet: **20.01.1999**
(21) Numéro de dépôt: 95920994.1
(22) Date de dépôt: 12.06.1995
(51) Int. Cl.: F16H 1/32

(54) **REDUCTEUR A EXCENTRIQUES**
ZYKLOIDENGETRIEBE
GEAR REDUCER COMPRISING ECCENTRICS

(30) Priorité: 13.06.1994 FR 9407404
(43) Date de publication de la demande: 02.04.1997
(73) Titulaire: Durand, François, F-06600 Antibes (FR)
(72) Inventeur: Durand, François, F-06600 Antibes (FR)
(86) Numéro de dépôt international: FR9500763
(87) Numéro de publication internationale: WO9534771

(56) Documents cités:
- EP-A- 0 465 292
- GB-A- J30 215
- GB-A- 477 792
- GB-A- 2 122 263

## Description

Lorsqu'un train d'engrenages est composé d'une couronne à denture intérieure et d'une roue à denture extérieure engrenant ensemble, le nombre de dents de la roue à denture extérieure étant légèrement inférieur à celui de la couronne à denture intérieure, l'entraxe entre la roue à denture extérieure et la couronne à denture intérieure est très faible, il est égal à la moitié de la différence de nombres de dents multipliée par le module. En faisant osciller à l'aide d'excentriques la roue dans la couronne, il est possible d'obtenir avec un seul train d'engrenages un rapport de réduction, ou de multiplication, important puisque sa valeur est égale au nombre de dents de la couronne à denture intérieure divisé par la différence de nombre de dents entre la couronne à denture intérieure et la roue à denture extérieure. L'oscillation de la roue à denture extérieure dans la couronne à denture intérieure peut se faire par la rotation synchronisée et simultanée de deux excentriques dont les axes sont parallèles aux axes de la couronne et de la roue dentée, ces deux excentriques tourillonnent dans l'élément qu'ils font osciller. Les paliers des excentriques reprennent alors les efforts correspondants au couple de sortie basse vitesse mais ils tournent à la vitesse de sortie multipliée par le rapport de réduction du train d'engrenages à excentriques, en conséquence ces paliers ont de gros efforts en tournant relativement vite. Une façon de diminuer les réactions sur ces paliers est d'augmenter l'entraxe entre les deux excentriques en les plaçant à l'extérieur de la couronne à denture intérieure cette configuration est visible sur la figure 1 de la demande de brevet européen EP 0 465 292 A1 mais dans ce cas, c'est la couronne à denture intérieure qui oscille autour de la roue à denture extérieure et ceci ne permet pas de transmettre des efforts, il y a incompatibilité entre sens de rotation et sens des efforts. Lorsque la différence de nombre de dents entre couronne à denture intérieure et roue dentée à denture extérieure est faible, entre 2 et 4, les conditions d'engrenement sont telles que d'une part la portance se fait sur des surfaces et non pas sur des lignes et d'autre part les glissements relatifs entre les dents en contact sont pratiquement inéxistants, les dents travaillent comme des cannelures, en conséquence les charges transmissibles par un tel train d'engrenages sont très importantes, leur limite n'est pas fixée par les dents proprement dites mais par les paliers des excentriques d'une part et par l'ovalisation de la couronne à denture intérieure d'autre part.

Le but de la présente invention est un réducteur à excentriques qui profite des avantages de ce type de réducteur, à savoir:
- une grande démultiplication avec un seul train d'engrenages,
- portance des dents sur des surfaces,
- pas de glissement pour les dents en contact,
ceci en minimisant les inconvénients, à savoir:
- durée de vie faible pour les paliers d'excentriques,
- ovalisation de la couronne à denture intérieure,
- balourd due à l'oscillation de la roue à denture extérieure.

A cet effet le réducteur à excentriques selon l'invention comporte un moyeu basse vitesse qui est muni d'une nervure circulaire dont la périphérie est rigidement reliée à une couronne à denture intérieure, cette couronne à denture intérieure engrenne avec une roue à denture extérieure dont le nombre de dents est de 2 à 4 dents inférieur, la roue à denture extérieure est solidaire d'un bras de réaction qui passe à coté de la couronne à denture intérieure, ce bras de réaction a, diamétralement opposés, deux excroissances qui recoivent chacune la bague extérieure des roulements d'excentriques qui font osciller le bras de réaction, donc la roue à denture extérieure, les plans médians de la roue à denture extérieure et des roulements d'excentriques étant proches les uns des autres. Les roulements d'excentriques sont situés à l'extérieur de la couronne à denture intérieure et sont montés sur des arbres à excentriques dont les roulements sont dans les parois du carter du réducteur. Les arbres à excentriques sont entrainés d'une façon synchrone et simultanée par des réducteurs primaires composés d'une manière connue d'engrenages cylindriques, coniques ou à vis sans fin, ces différents réducteurs primaires ayant un arbre d'entrée unique et commun. Cette solution est valable pour des vitesses de rotation très lente, dès que la vitesse de rotation des arbres à excentriques dépasse 150 t/m les masses oscillantes deviennent la source d'efforts parasites qui peuvent être nuisibles, en conséquence il faut les compenser et pour cela le réducteur à excentriques comporte alors un moyeu basse vitesse qui est muni dans sa partie médiane d'une nervure circulaire dont la périphérie est rigidement reliée à la partie médiane d'une couronne à denture intérieure qui est divisée en deux parties sensiblement égales par la nervure circulaire du moyeu, chaque partie de la couronne à denture intérieure engrene avec une roue à denture extérieure dont le nombre de dents est de 2 à 4 dents inférieur. Les roues à denture extérieure sont chacune solidaire d'un bras de réaction qui passe à coté de la couronne à denture intérieure, ces bras de réaction ayant chacun, diamétralement opposés, deux excroissances qui recoivent chacune la bague extérieure des roulements d'excentriques qui font osciller chaque bras de réaction donc chaque roue à denture extérieure, les plans médians de chaque roue à denture extérieure ainsi que des roulements des excentriques correspondant étant proches les uns des autres. Les roulements d'excentriques sont montés sur des arbres à excentriques dont les roulements sont situés dans les parois du carter du réducteur. Les arbres à excentriques sont entrainés d'une façon synchrone et simultanée par des réducteurs primaires composés d'une manière connue d'engrenages cylindriques, coniques ou à vis sans fin, ces différents réducteurs primaires ayant un arbre d'entré unique et commun. Pour les deux roues à denture extérieure, donc pour les deux bras de réactions, il n'y a que deux arbres à excentrique, chaque arbre à excentrique ayant deux excentriques décalés l'un par rapport à l'autre de 180°, un excentrique servant pour l'un des bras de réaction l'autre excentrique servant pour l'autre. Les bras de réaction comportent chacun un centrage cylindrique rentrant à l'intérieur de la couronne à denture intérieure, chaque roue à denture extérieure est centrée sur les parties cylindriques précitées, les roues à denture extérieure étant rendues solidaires en rotation par rapport à son bras de réaction à l'aide de goupilles élastiques. La légère rotation sous charge entre roue à denture extérieure et centrage du bras de réaction, due aux déformations des goupilles élastiques par la charge, permet d'éviter que, suite aux tolérances d'usinages, toute la puissance passe par une seule roue à denture extérieure, grâce à ces goupilles élastiques la répartition de charge entre les deux roues à denture extérieure peut se situer entre 50%,50% et 60%,40%, elle ne peut pas être 100%,0%. Lorsque pour le même bras de réaction les roulements des deux excentriques sont des roulements avec jeu interne identique, la répartition des efforts, agissant dans le plan commun aux axes de rotation des deux excentriques, entre les roulements des deux excentriques est statiquement indéterminée, de plus , en cas de variation des températures entre bras de réaction et carter, des efforts parasites importants peuvent être créer aussi bien dans les roulements d'excentriques que dans les roulements qui centrent les arbres d'excentriques dans le carter. Afin de palier aux inconvénients précités la présente invention prévoit de munir chaque bras de réaction d'un coté avec un roulement centré directement dans l'excroissance du bras de réaction et de l'autre coté avec un roulement centré dans un bloc coulissant qui peut coulisser dans les excroissances du bras de réaction ce qui permet, avec des efforts parasites minimes, d'une part d'adapter l'entraxe entre les deux roulements d'excentriques à l'entraxe dans le carter des axes de rotation des arbres à excentriques et d'autre part d'avoir une répartition statiquement déterminée des efforts entre les deux excentriques, les efforts agissant dans le plan commun aux axes de rotation des deux arbres à excentriques sont repris uniquement par le roulement de l'arbre à excentrique qui est centré directement dans l'excroissance du bras de réaction; le roulement de l'arbre à excentrique qui est centré dans un bloc coulissant ne reprend que des efforts dont le sens est perpendiculaire au plan commun aux axes de rotation des deux arbres à excentriques. Pour des réducteurs de taille moyenne exécutés avec des tolérances d'usinages très petites et dont les variations de températures entre bras de réaction et carter ne peuvent être que très faibles, il est possible d'éviter le bloc coulissant précité et d'avoir un roulement avec jeu initial plus grand, par exemple jeu C3, centré directement dans l'excroissance du bras de réaction. Lorsque chaque arbre à excentrique a deux excentriques décallés de 180°, un excentrique recevra un roulement centré directement dans l'excroissance du bras de réaction et un roulement centré dans un bloc coulissant pour l'autre bras de réaction, chacun des deux bras de réaction aura un roulement d'excentrique centré directement dans l'excroissance du bras de réaction et un roulement d'excentrique centré dans un bloc coulissant.

Les figures ci annexées représentent à titre indicatif et non limitatif des réducteurs à excentriques selon l'invention.

La figure 1 est une vue de face montrant en pointillés les diamètres extérieurs des engrenages des réducteurs primaires.

La figure 2 est une coupe passant par le plan commun aux axes de rotation des arbres à excentriques, plan II,II de la figure 1.

La figure 3 est une coupe par le plan médian des roulements d'excentriques d'un bras de réaction, plan III,III de la figure 2.

La figure 4 est une coupe similaire à celle de la figure 2 mais pour un réducteur à très basse vitesse ayant un seul excentrique par arbre à excentrique et des réducteurs primaires à vis sans fin.

La figure 5 est une coupe passant par le plan médian des roulements d'excentriques du bras de réaction, plan IV IV de la figure 4.

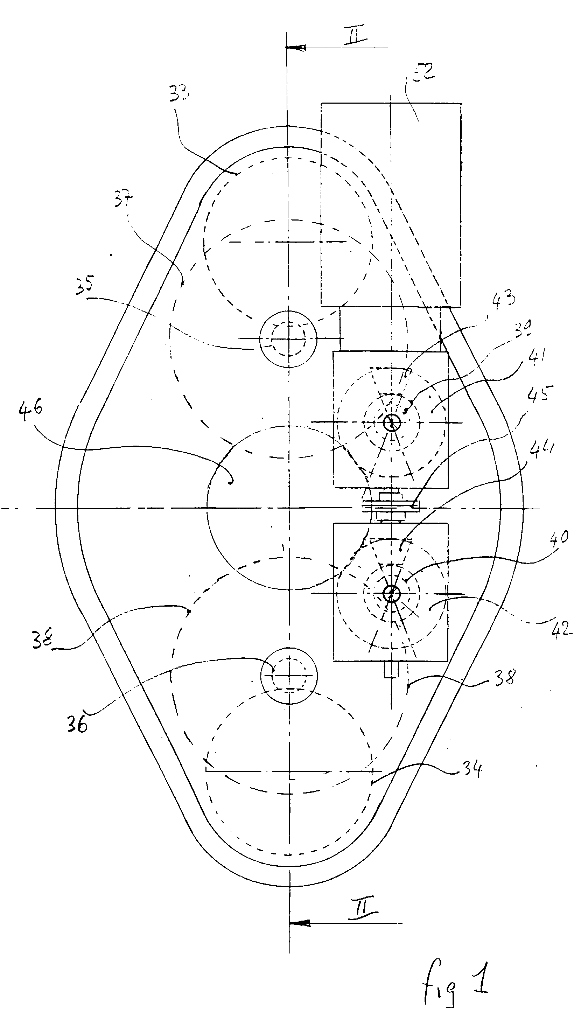

Pour les figures 1, 2 et 3, 1 est le moyeu qui est solidaire de l'arbre entrainé 2 par les cannelures 3, 4 est la nervure circulaire du moyeu 1 dont la périphérie est solidaire de la couronne à denture intérieure 5, cette couronne comportant deux parties identiques 6 et 7. 8 est la roue à denture extérieure qui engrene avec la couronne 6, 9 est la roue à denture extérieure qui engrene avec la couronne 7. Le moyeu 1 est centré dans les parois 10,11 du carter du réducteur à l'aide des roulements 12, 13. Les roues 8,9 sont centrées sur les bras de réaction 14, 15 à l'aide des centrages 16, 17 et sont solidaires en rotation de ces centrages 16, 17 à l'aide des goupilles élastiques 18, ces goupilles élastiques ont une excroissance 51 qui rentre dans un trou percé dans le bras de réaction correspondant afin de les empêcher de tourner sur elle même. Les bras de réaction 14, 15 sont respectivement munis des excroissances 19, 20 et 21, 22, excroissances qui reçoivent respectivement les bagues extérieures des roulements d'excentriques 23, 24 et 25, 26. Les roulements 23, 25 et 24, 26 sont respectivement solidaires des arbres à excentriques 27 et 28, chaque arbre à excentriques comporte deux excentriques, 29 et 30 pour l'arbre 27, 31 et 32 pour l'arbre 28. Les excentriques 29 et 30 ainsi que les excentriques 31 et 32 sont décalés de 180° l'un par rapport à l'autre, ainsi, lors de la rotation les balourds dus à l'oscillation des masses du bras de réaction 14 avec la roue 8 et les roulements 23, 24 sont compensés par ceux du bras de réaction 15 avec la roue 9 et les roulements 25, 26. Les nervures circulaires 49 et 50 qui sont centrées sur les couronnes 6 et 7 tout en étant prisonnières entre les couronnes 6, 7 et les bras de réaction 14, 15 contribuent avec la nervure 4 à la rigidité des couronnes 6 et 7 pour en limiter l'ovalisation sous charge. Les roulements d'excentriques 23 et 26 ont un jeu interne normal et les roulements d'excentriques 24 et 25 ont un jeu interne plus grand, par exemple jeu C3, ceci pour éviter, d'une manière connue, des efforts parasites importants dans ces roulements en cas de dilatations thermiques differentes entre carter et bras de réaction. Les arbres à excentriques 27,28 sont respectivement entrainés en rotation d'une façon synchrone et simultanée à l'aide des roues dentées identiques 33,34 elles même entrainées par les pignons identiques 35,36 qui sont respectivement solidaires des roues dentées identiques 37, 38 elles même entrainées par les pignons identiques 39,40. Les pignons 39,40 sont respectivement solidaires des roues coniques identiques 41,42 entrainées respectivement par les pignons coniques identiques 43,44 reliés entre eux par l'accouplement rigide 45, les pignons coniques 43,44 sont entrainés par le même moteur 52. Il est évident que, sans rien changer au caractère de l'invention il est possible d'entrainer directement les arbres à excentriques 27,28 par des roues d'engrenages coniques, les pignons coniques étant reliés entre eux par un accouplement rigide en torsion et étant entrainées par le même moteur. Il est également possible de modifier l'implantation des engrenages cylindriques primaires, par exemple d'avoir des roues cylindriques solidaires des pignons 39,40, ces roues cylindriques étant entrainées par le même pignon lui même entrainé par le moteur. Il est a remarquer que pour l'exemple choisi, les trains primaires sont disposés pour faciliter le montage et le démontage du réducteur arbre creux sur l'arbre entrainé 2, à cet effet la plaque 47 fixe axialement le réducteur sur l'arbre 2, le chapeau 46 permet l'accès à la plaque 47 et la jupe 48 qui est solidaire du chapeau du roulement 13 empêche, lors du montage ou du démontage, la chute accidentelle de visserie dans le carter du réducteur primaire.

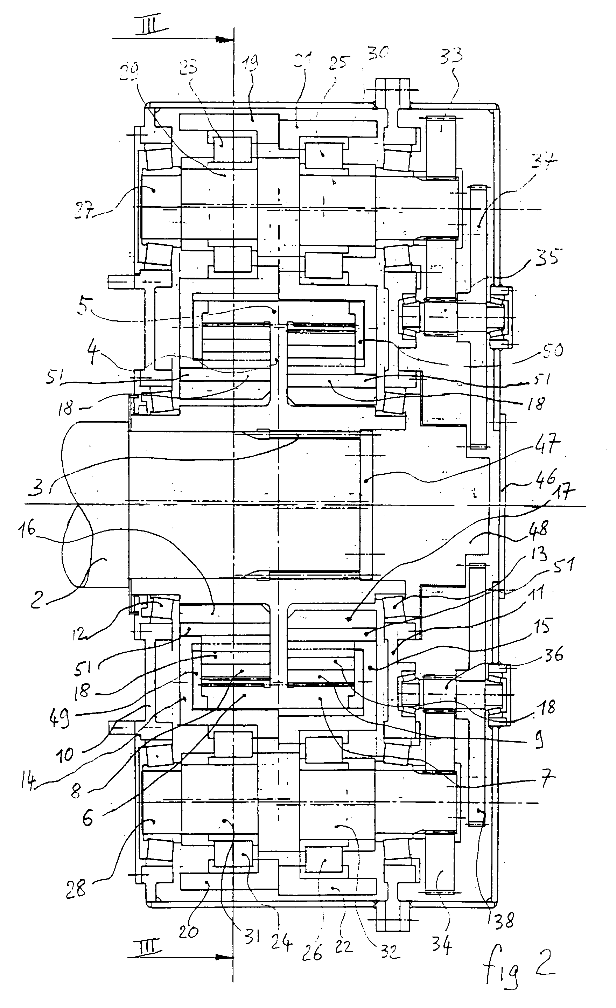

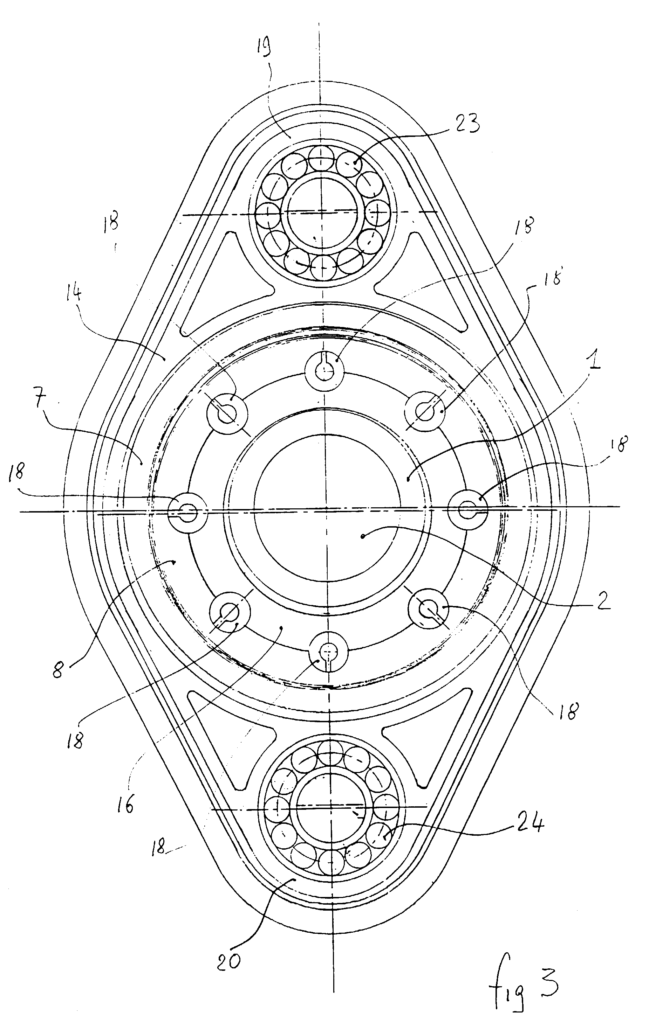

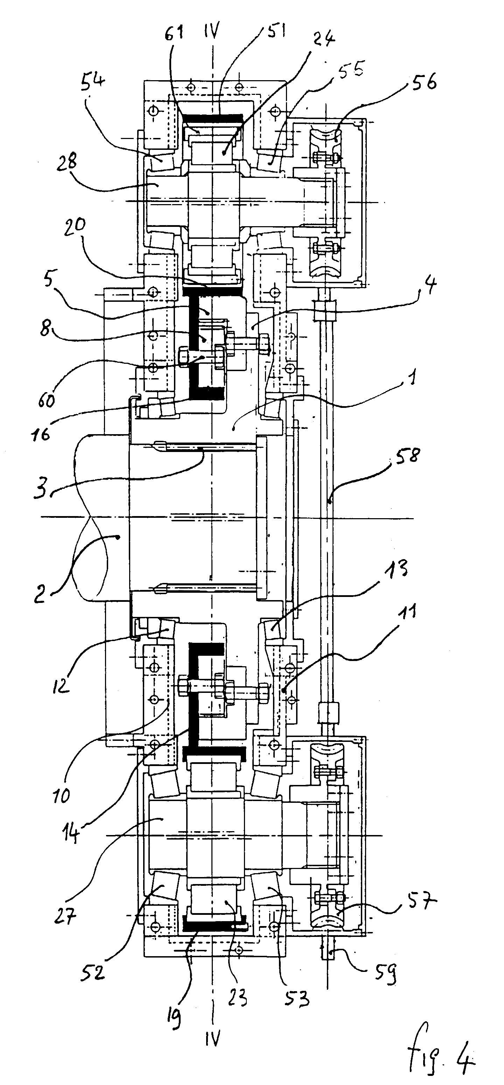

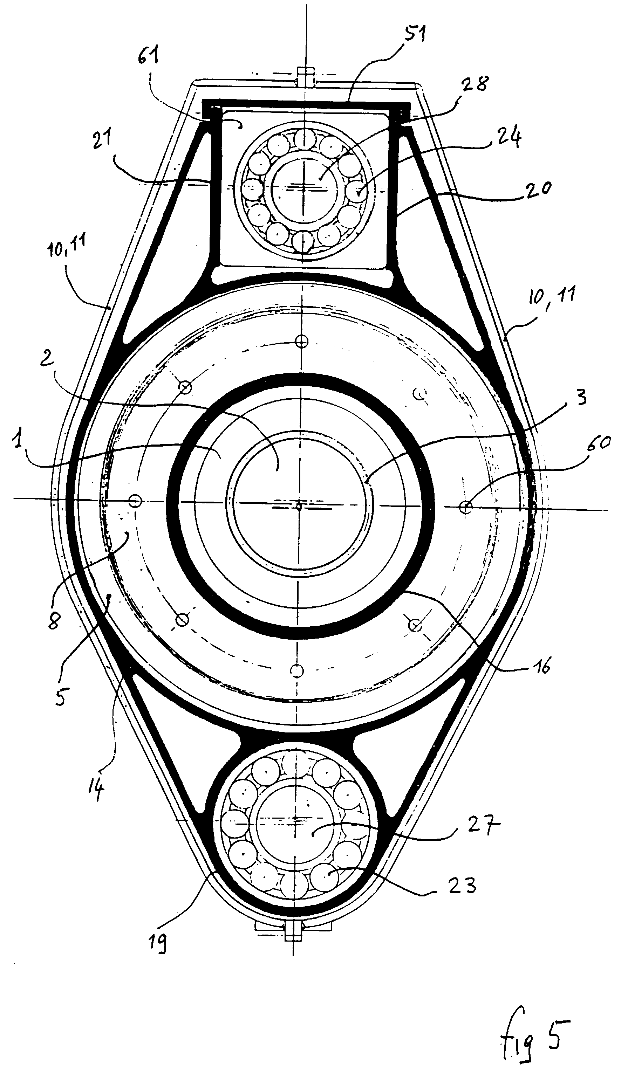

Pour les figures 4 et 5, 1 est le moyeu qui est solidaire de l'arbre entrainé 2 par les cannelures 3; 4 est la nervure circulaire du moyeu 1 dont la périphérie est solidaire de la couronne à denture intérieure 5, 8 est la roue à denture extérieure qui engrenne avec la couronne 5. Le moyeu 1 est centré dans les parois 10, 11 du carter du réducteur à l'aide des roulements 12,13. La roue dentée 8 est centrée sur le bras de réaction 14 à l'aide du centrage 16 et est rendue solidaire en rotation à l'aide des boulons 60. Le bras de réaction 14 est muni d'excroissances 19, 20 et 21. L'excroissance 19 reçoit le roulement d'excentrique 23, les excroissances 20 et 21 servent de guides et d'appuis pour le bloc coulissant 61 dans lequel est centré le roulement d'excentrique 24; la plaque 51 réunie entre elles les excroissances 20 et 21 afin de mieux répartir les efforts; avec ce montage la répartition des efforts entre les roulements 23 et 24 est statiquement déterminée, le roulement 24 ne pouvant reprendre que des efforts perpendiculaires au plan commun aux axes de rotation des excentriques. Les arbres à excentriques 27 et 28 tourillonnent dans le carter 10,11 à l'aide des roulements 52,53 et 54,55, ces arbres à excentriques 27 et 28 recoivent respectivement les couronnes tangentes 56 et 57 dont les vis sans fin respectives, non visibles sur le plan, sont réunies entre elles par un arbre à cardan 58, l'extrémité 59 de l'une des vis sans fin étant l'arbre d'entré du réducteur. Il est évidemment possible, lorsque le réducteur a deux bras de réactions 14 et 15 comme représenté sur la figure 2, d'avoir des roulement d'excentriques 24 et 25 avec jeux internes normaux centrés dans des blocs coulissants 61 comme représenté sur les figures 4 et 5 ceci est une grosse amélioration par rapport au montage de roulements avec jeux internes augmentés montés directement dans les bras de réaction 14 et 15 comme représenté sur les figures 2 et 3.

## Revendications

1. Réducteur à excentriques basé sur l'engrènement d'une couronne à denture intérieure avec une roue dentée à denture extérieure, la différence de nombre de dents entre couronne et roue étant de 2 à 4 dents, réducteur à excentriques comportant un moyeu basse vitesse (1) muni d'une nervure circulaire (4) dont la périphérie est rigidement reliée à une couronne à denture intérieure (5) qui engrène avec une roue à denture extérieure (8) qui oscille à l'intérieur de la couronne à denture intérieure (5) à l'aide de deux arbres à excentriques (27)(28) qui sont entraînés d'une façon synchrone et simultanée par des réducteurs primaires composés d'une manière connue d'engrenages cylindriques, coniques ou à vis sans fin, ces réducteurs primaires étant entraînés par un arbre d'entrée unique et commun, donc un seul moteur, caractérisé en ce que la roue à denture extérieure (8) est solidaire d'un bras de réaction (14) qui passe à côté de la couronne à denture intérieure (5), ce bras de réaction (14) ayant, diamétralement opposés, deux excroissances (19)(20) qui reçoivent chacune la bague extérieure des roulements d'excentriques (23)(24) qui font osciller le bras de réaction (14) donc la roue à denture extérieure (8), les plans médians de la roue à denture extérieure (8) et des roulements d'excentriques (23) (24) étant proches les uns des autres et en ce que les roulements d'excentriques (23)(24) situés à l'extérieur de la couronne à denture intérieure (5) sont montés sur des arbres à excentriques (27)(28) dont les roulements sont situés dans les parois (10)(11) du carter du réducteur.

2. Réducteur à excentriques selon la revendication 1, caractérisé en ce que ce réducteur à excentriques comporte un moyeu basse vitesse (1) muni dans sa partie médiane d'une nervure circulaire (4) dont la périphérie est rigidement reliée à la partie médiane d'une couronne à denture intérieure (5) qui est divisée en deux parties sensiblement égales (6)(7) par la nervure circulaire (4) du moyeu (1), chaque partie de la couronne à denture intérieure (6)(7) engrènant avec une roue à denture extérieure (8)(9), les roues à dentures extérieure (8)(9) étant chacune solidaire d'un bras de réaction (14)(15) qui passent à coté de la couronne à denture intérieure (5), ces bras de réaction (14)(15) ayant chacun, diamétralement opposés, deux excroissances (19)(20) et (21)(22) qui reçoivent chacune la bague extérieure des roulements d'excentrique (23)(24) et (25)(26) qui font osciller chaque bras de réaction (14)(15) donc chaque roue à denture extérieure (8)(9), les plans médians de chaque roue à denture extérieure (8)(9) ainsi que des roulements des excentriques correspondants (23)(24) et (25)(26) étant proches les uns des autres, les roulements d'excentrique (23)(24) et (25)(126) étant montés sur des arbres à excentriques (27)(28) dont les roulements sont situés dans les parois (10)(11) du carter du réducteur, deux excentriques (29)(31) pour le bras de réaction (14) et deux excentriques (30)(32) pour le bras de réaction (15) étant décollés les uns (29)(31) par rapport aux autres (30)(32) afin d'équilibrer entre elles les masses oscillantes (14)(15),(8)(9),(18),(23)(24) et (25)26).

3. Réducteur à excentriques selon la revendication 2, caractérisé en ce que il n'y a que deux arbres à excentriques (27)(28) pour les deux bras de réaction (14)(15) donc les deux roues à denture extérieure (8)(9) chaque arbre à excentriques (27)(28) ayant deux excentriques (29)(30) et (31)(32) décalés l'un par rapport à l'autre de 180°, un excentrique (29)(31) servant pour l'un des bras de réaction (14) l'autre excentrique (30)(32) servant pour l'autre bras de réaction (15).

4. Réducteur à excentriques selon les revendications 2 et 3, caractérisé en ce que les bras de réaction (14)(15) comportent chacun un centrage cylindrique (16)(17) rentrant à l'intérieur de la couronne à denture intérieure (6)(7) chaque roue à denture extérieure (8)(9) étant centrée sur les centrages cylindriques (16)(17), les roues à denture extérieure étant rendues solidaires en rotation par rapport à leur centrage cylindrique respectif (16)(17) à l'aide de goupilles élastiques (18) munies d'une excroissance (51) pour immobilisation en rotation.

5. Réducteur à excentriques selon la revendication 1, caractérisé en ce que pour le bras de réaction (14) une excroissance (19) reçoit directement le roulement d'excentrique (23), l'autre roulement d'excentrique (24) étant centré dans un bloc coulissant (61) qui coulisse entre deux excroissances (20)(21) réunies entre elles par une plaque (51).

6. Réducteur à excentriques selon les revendications 2 et 3, caractérisé en ce que pour chaque arbre à excentriques (27)(28) qui a deux excentriques (29)(30) et (31)(32) décallés de 180°, un des excentriques (29)(32) reçoit un roulement d'excentrique (23)(26) qui est centré directement dans l'excroissance (19)(22) du bras de réaction (14)(15) et un autre roulement d'excentrique (25)(24) qui est centré dans un bloc coulissant (61) qui coulisse entre deux excroissances (20)(21) réunies entre elles par une plaque (51), chaque bras de réaction (14)(15) recevant directement un roulement d'excentrique (23)(26) centré directement dans une excroissance (19)(22) l'autre roulement d'excentrique (24)(25) pour chaque bras de réaction (14)(15) étant centré dans un bloc coulissant (61) qui coulisse entre deux excroissances (20)(21) réunies entre elles par une plaque (51).

## Patentansprüche

1. Zykloidengetriebe aufgebaut auf dem Eingriff zwischen einem Hohlrad mit Innenverzahnung und einem Zahnrad mit Aussenverzahnung wobei die Differenz der Zähnezahl zwischen Hohlrad une Zahnrad 2 bis 4 Zähne beträgt. Zykloidengetriebe, bei welchem eine langsam drehende Nabe (1) mit einer Kreisrippe (4) mit einem Hohlrad mit Innenverzahnung (5) starr verbunden ist. Dieses Hohlrad (5) ist in Eingriff mit einem Zahnrad mit Aussenverzahnung (8) welches innerhalb des Hohlrades (5) kreiselt, dies mittels zwei Exzenterwellen (27)(28)die synchron mittels bekannten Vorgelegen mit zylindrischen, kegeligen oder schneckenartigen Rädern angetrieben sind, diese Vorgelege sind über eine einzige Antriebswelle eines einzigen Motors, angetrieben, dadurch gekennzeichnet dass das Zahnrad mit Aussenverzahnung (8) mit einer Drehmomentstütze (14), welche neben dem Hohlrad (5) Platz findet, starr verbunden ist, diese Drehmomentstütze (14) hat, diametral entgegengesetzt, zwei Auswüchse (19)(20) die je den Aussenring der Exzenterlager (23)(24) erhalten, die die Drehmomentstütze (14), also das Zahnrad (8), zum kreiseln bringen, die Mittelflächen des Zahnrades (8) und der Exzenternlager (23)(24) sind nahe beieinander und die Exzenterlager (23)(24), die sich ausserhalb des Hohlrades (5) befinden, sind auf Exzenterwellen (27)(28) montiert, deren Lager sich in den Gehäusewänden (10)(11) befinden.

2. Zykloidengetriebe gemäss Anspruch 1 dadurch gekennzeichnet dass dieses Zykloidengetriebe eine langsamdrehende Nabe (1) hat, die in ihrem Mittelteil eine Kreisrippe (4) hat deren Umkreis mit der Mitte eines Hohlrades mit Innenverzahnung (5) starr verbunden ist, welches in zwei relativ gleiche Teile (6)(7) durch die Kreisrippe (4) der Nabe (1) geteilt ist. Jedes Teil des Hohlrades (6)(7) ist im Eingriff mit einem Zahnrad (8)(9), jedes Zahnrad (8)(9) ist je mit einer Drehmomentstütze (14)(15) verbunden die je neben den Hohlradteilen (6)(7) Platz finden, diese Drehmomentstützen (14)(15) haben je, diametral entgegengesetzt, zwei Auswüchse (19)(20) und (21)(22) die je den Aussenring der Exzenterlager (23)(24) und (25)(26) erhalten die jede Drehmomentstütze (14)(15), also jedes Zahnrad (8)(9), zur kreiseln bringen. Die Mittelflächen jedes Zahnrades (8)(9) sowie der entsprechenden Exzenterlager (23)(24) und (25)(26) sind nahe beieinander. Die Exzenterlager (23)(24) und (25)(26) sind auf Exzenterwellen (27)(28) montiert deren Lager sich in den Gehäusewänden (10)(11) befinden. Die zwei Exzenter (29)(31) für eine Drehmomentstütze (14) und die zwei Exzenter (30)(32) für die andere Drehmomentstütze (15) sind die einen (29)(31) gegen die andern (30)(32) versetzt um die kreiselnden Massen (14)(15),(8)(9),(18)(51),(23)(24) und (25)(26) untereinander auszugleichen.

3. Zykloidengetriebe gemäss Anspruch 2 dadurch gekennzeichnet dass es nur zwei Exzenterwellen (27)(28) für die zwei Drehmomentstützen (14)(15), also für die zwei Zahnräder (8)(9) gibt, jede Exzenterwelle (27)(28) hat zwei Exzenter (29)(30) und (31)(32) um 180° der eine gegenüber dem anderen versetzt, ein Exzenter (29)(31) wird für eine Drehmomentstütze (14) der andere Exzenter (30)(32) wird für die andere Drehmomentstütze (15) gebraucht.

4. Zykloidengetriebe gemäss Ansprüche 2 und 3 dadurch gekennzeichnet dass die Drehmomentstützen (14)(15) je eine zylindrische Zentrierung (16)(17) haben, die innerhalb der Hohlräder (6)(7) Platz nehmen, jedes Zahnrad (8)(9) ist dann auf die zylindrische Zentrierung (16)(17) zentriert und ist rotationsmässig mit ihrer Zentrierung (16)(17) mittels elastischer Stifte (18) verbunden, diese elastischen Stifte (18) haben je einen Auswuchs (51), um eine Rotation um ihre eigene Achse zu verhindern.

5. Zykloidengetriebe gemäss Anspruch 1 dadurch gekennzeichnet, dass für die Drehmomenstütze (14) ein Auswuchs (19) direkt das Exzenterlager (23) bekommt, das andere Exzenterlager (24) ist in einem Gleitblock (61) eingebaut, welches zwischen zwei Auswüchsen (20)(21) gleitet, eine Platte verbindet die zwei Auswüchse.

6. Zykloidengetriebe gemäss Ansprüche 2 und 3 dadurch gekennzeichnet dass für jede Exzenterwelle (27)(28) die je zwei Exzenter (29)(30) und (31)(32) versetzt haben, einer der Exzenter (29)(32) bekommt ein Exzenteriager das direkt in dem Auswuchs (19)(22) der Drehmomentstützen (14)(15) eingebaut ist, das andere Exzenterlager (25)(24) ist in einem Gleitblock (61) zentriert der zwischen zwei Auswüchse (20)(21) gleitet, die mit einer Platte verbunden sind, jede Drehmomentstütze (14)(15) hat ein Exzenterlager (23)(26) direkt in dem Auswuchs zentriert, das andere Exzenterlager (24)(25) ist in einem Gleitblock (61) zentriert der zwischen zwei Auswüchsen (20)(21) der Drehmomentstützen (14)(15) gleiten kann.

## Claims

1. Gear reducer comprising eccentrics based upon the meshing of a gear ring with internal teeth with a gear wheel with external teeth, the difference of teeth numbers between gear ring and gear wheel being two to four teeth; gear reducer comprising eccentrics having a low speed hub (1) with a circular rib (4) whose periphery is connected to a gear ring with internal teeth (5) which meshes with a gear wheel with external teeth (8), this gear wheel (8) orbiting inside the gear ring (5) by the means of two eccentric shafts (27)(28) which are synchronusly driven by prime reducers having, in a well known manner, cylindrical, bevel or worm gears those prime reducers being driven by a common input shaft; gear reducer comprising eccentrics for which the eccentric bearings (23)(24) are located outside the gear ring (5) this gear ring (5) being rigidly connected to the slow speed hub (1), the gear wheel (8) being fixed on a torque arm (14) passing beside the gear ring (5), this torque arm (14) having, diametricaly opposed, two protuberances (19)(20) receaving each the outer ring of the bearings (23)(24) for the eccentrics which are generarting the orbitation of the torque arm (14) and consequently of the gear wheel (8), the median plane of the gear wheel (8) and of the eccentric bearings (23)(24) being close one to the other, the eccentric shafts (27)(28) are journaled in the side walls (10)(11) of the gear box housing.

2. Gear reducer comprising eccentrics according to claim 1 for which the low speed hub (1) has a circular rib (4) located in its median plane whose periphery is rigidly connected to the median part of a gear ring with internal teeth (5) which is divided in two equal parts (6)(7) by the circular rib (4) of the hub (1), each part of the gear ring (6)(7) meshing with a gear wheel with external teeth (8)(9) which are each respectively connected to a torque arm (14)(15) passing on each side of the gear ring (5), those torque arms (14)(15) having each, diametricaly opposed, two protuberances (19)(20) and (21)(22) receaving each the outer ring of the eccentric bearings (23)(24) and (25)(26) which generate the orbitation of each torque arm (14)(15) and consequently of each gear wheel (8)(9), the median plane of each gear wheel (8)(9) and of the eccentric bearings (23)(24) and (25)(26) being respectively close one to each other, the eccentric bearings (23)(24) and (25)(26) being located on eccentric shafts (27)(28) whose bearings are located in the gear box housing, the two eccentrics (29)(31) for one torque arm (14) and the two eccentrics (30)(32) for the other torque arm (15) being shifted two (29)(31) toward the other two eccentrics (30)(32), this yo balance the centrifugal forces due to the orbiting masses (14)(15)(8)(9)(18)(51)(23)(24) and (25(26).

3. Gear reducer comprising eccentics according to claim 2 for which their are only two eccentric shafts (27)(28) for the two torque arms (14)(15) which means for the two gear wheels (8)(9), each eccentric shaft (27)(28) having two eccentrics (29)(30) and (31)(32) shifted 180° one toward the other, one eccentric (29)(31) of each eccentric shaft being used for one torque arm (14), the other eccentric (30)(32) of each eccentric shaft being used for the other torque arm (15).

4. Gear reducer comprising eccentrics according to claims 2 or 3 for which the torque arms (14)(15) have a cynlindrical centering element (16)(17) coming inside the geared rings (5)(6)(7), the geared wheels (8)(9) being centered on the cylindrical centering elements (16)(17), the gear wheels (8)(9) being rotationaly connected to their cylindrical centering element by the means of elastic split pins (18) having each a protuberance (51) for avoiding the rotation of the split pin (18) around its own axle.

5. Gear reducer comprising eccentrics according to claim 1 for which one protuberance (19) of the torque arm (14) receave directly the eccentric bearing (23) the other eccentric bearing (24) being centered in a glide bloc (61) gliding between two protuberances (20)(21) of the torque arm and joined together by a plate.

6. Gear reducer comprising eccentrics according to claims 2 or 3 for which each eccentric shaft (27)(28) which has two eccentrics (29)(30) and (31)(32) shifted, one of the eccentrics (29)(32) receave an eccentric bearing (23)(26) which is directly journaled in the protuberance (19)(22) of the torque arm (14)(15), the other eccentric bearing (24)(25) being journaled in a gliding bloc (61) which glides between two protuberances (20)(21) joined together by a plate, each torque arm (14)(15) having an eccentric bearing (23)(26) directly journaled in a protuberance (19)(22) the other eccentric bearing (24)(25) for each torque arm (14)(15) being journaled in a gliding bloc (61) gliding between two protuberances (20)(21) joined together by a plate.
